# EUROPEAN PATENT APPLICATION

(11) **EP 3 567 475 A1**
(43) Date of publication of application: **13.11.2019**
(21) Application number: 18170986.6
(22) Date of filing: 07.05.2018
(51) Int. Cl.: G06F 9/44, G06F 9/50, B60H 1/00, H04L 29/08

(54) **METHOD AND SYSTEM FOR CONTEXTUAL AND PERSONALIZED SERVICES IN A CLOUD-EDGE ENVIRONMENT**

(71) Applicant: Bayerische Motoren Werke Aktiengesellschaft, 80809 München (DE)
(72) Inventor: Nallappa Soundararajan, Kasthuri Rengan, Schaumburg, IL 60193 (US); Dr.Tian, Jilei, Chicago, IL 60605 (US); Woker, Clint, St. Charles, IL 60174 (US)

(57) **Abstract**

A method and system for controlling a component of a vehicle is disclosed. The vehicle is connected to a cloud computing infrastructure and includes an edge computing device, the edge computing device being in data communication with the cloud computing infrastructure. The method comprises determining first data to be processed using the cloud computing infrastructure, determining second data to be processed using the edge computing device, processing the first and second data, determining one or more operating parameters for the component based on the first and second data, and operating the component based on the one or more operating parameters. The system comprises a control unit configured for performing one or more of the method steps.

## Description

### Technical Field

The present disclosure relates to a method and system for providing contextual and personalized services in a cloud-edge environment, and, in particular, to a method and system for providing contextual and personalized services for automotive applications in a cloud-edge environment to facilitate system and user experience optimization. In a preferred embodiment, there is provided a cloud-edge-based method and system for smart pre-conditioning a vehicle.

### Background Art

Cloud computing generally refers to ubiquitous access to shared pools of configurable system resources and higher-level services that can be rapidly provisioned with minimal management effort, over a network such as the Internet. Cloud computing, thus, facilitates the use of infrastructure, platforms, and/or services via a network and largely independently from a device used and/or a location of a user. Benefits of cloud computing include advantages in terms of costs, availability, access, performance, maintenance, and more.

Edge computing generally refers to the optimization of cloud computing systems by performing data processing near the source of data and/or near the user, at the edge of a network. This can reduce the communications bandwidth required between edge devices (e.g. mobile devices, wearable devices, sensors), and a central infrastructure (e.g. servers, database systems) by performing analytics and knowledge generation on devices at or near the source of the data. This approach requires leveraging resources that may not be continuously connected to a network such as laptops, smartphones, tablets and sensors.

Hybrid cloud-edge-based systems can combine features of cloud computing and edge computing and, thus, support building highly contextual and personalized services. However, there has been little research work in the field of commercial effective contextual recommendation algorithms and systems, especially in automotive applications, which need to take into account the end-to-end user experience, including off-board before a trip and on-board during driving. Most of such work has been focusing on research related aspects, rather than focused on products and platforms deployable in the field. Basic components for building a suitable infrastructure have only become available very recently, for example including scalable schedulers capable of supporting application-specific dynamic user data (e.g. data about the trips of millions of users) and Internet of Things (IoT) edge computing devices and operating systems capable of supporting stream analytics as well as context modeling and feature/business logic functions in the client.

US 2013/0079978 A1 describes preconditioning of a vehicle, in which a prediction is made as to a start time of a next time trip by a vehicle. The start time is predicted based on previous trips made with the vehicle. Forecast weather information is obtained for a time period that includes or is proximate to the start time. Based on the forecast weather information, conditions in the cabin are predicted at the start time and a preconditioning time is determined for initiating the preconditioning of the cabin. At the preconditioning time, if the conditions in the cabin are within a set range of the predicted conditions, the cabin is preconditioned.

DE 10 2015 210 661 A1 describes a method and device for controlling a climate in the interior of a motor vehicle based on an operating state of the vehicle and/or on a performance of the vehicle takes place, wherein the operating state and/or the performance of the vehicle is determined before the controlling takes place.

The described systems do not rely on a service-based implementation. Further, the described systems appear to lack a flexible and intelligent notification system and contextual and/or fleet features (e.g. shared mobility) are not taken into consideration.

Embodiments of the disclosed methods and systems entail at least the following advantages.

Embodiments of the disclosed methods and systems are scalable and applicable, in particular, to automotive industry applications in which many data sources are typically available and where factors such as efficient use of processing and memory resources, bandwidth considerations, privacy enforcement, and reliable response times are crucial. The disclosed methods and system allow for the optimization of system performance in respective applications by shifting processing towards the cloud and/or the edge, and by improving the use of the available bandwidth, depending on the use case.

Further, contextual data pertaining to, for example personal behavior and fleet data are efficiently combined, preferably in real-time. Components of the car, such as climate control systems, can be proactively and predictively controlled in order to improve user experience in terms of a broader range of applications being available. This includes smart interior control, before and after a user enters a car, personal refueling and/or charging recommendations, improved safety and alerting, and many more applications.

A scalable production solution for contextual and personal intelligent platform and services is provided, the services including off-board smart preconditioning and on-board smart interior (e.g. heating and cooling), refueling/charging recommendation, augmented routing and navigation, etc.

IoT edge platform capability can be leveraged in order to run context-aware services at the edge, to collect telemetry and user analytics into the cloud infrastructure for high performance data processing and machine learning. A low response time is provided for context-aware (i.e. time critical) features, the networking costs are improved, networking dependency is reduced.

A flexible workflow management with reference design for smart interior (e.g. including smart preconditioning) is provided. Complex context situation can be modeled and processed, for example in case where pre-conditioning depends on the prediction of a next trip (e.g. based on one or more of a user's behavior (history), estimated temperatures pre-trip, rescheduling of trips, car sharing, etc.).

User experience may be greatly improved, the system may proactively engage the users and offer relevant but effortless services leveraging context and user behavior.

With respect to the exemplary use case of smart preconditioning, the system may be able to predict departure times and be configured to proactively provide preconditioning recommendations. For example, the system may provide a user with recommendations regarding the settings for certain climate control components (e.g. heating, cooling, windows, sunroof, heated surfaces, etc.). In particular cases, preconditioning may be based on one or more of temperature(s) inside the vehicle, weather conditions, user preferences, etc. Additionally, dynamic parameters may be taken into account, such as the (day-) time of a trip and context information (e.g. user has been working out, such that lower temperatures may be preferred as compared to default preferences).

### Summary of Invention

One or more of the objects specified above are substantially achieved by methods and system for controlling a component in a vehicle in accordance with any one of the appended claims, which alleviate or eliminate one or more of the disadvantages described above and which realize one or more of the aforementioned advantages.

According to the invention, there is provided a method for controlling a component in a vehicle. The vehicle is connected to a cloud computing infrastructure and includes an edge computing device. The edge computing device is in data communication with the cloud computing infrastructure. The method comprises determining first data to be processed using the cloud computing infrastructure, determining second data to be processed using the edge computing device, processing the first and second data, determining one or more operating parameters for the component based on the processed first and second data, and operating the component based on the one or more operating parameters.

In a preferred embodiment, the component includes a climate control system and operating the component comprises providing the climate control system with one or more climate control parameters configured for preconditioning the vehicle. The one or more climate control parameters configured for preconditioning the vehicle may preferably comprise one or more of: a temperature value, an air flow, a heating power of a heating unit, and a cooling power of a cooling unit.

In another preferred embodiment, the component includes a user information system and operating the component comprises providing, using the user information system, information regarding refueling and/or recharging of the vehicle.

In preferred embodiments of the present invention, determining the one or more operating parameters for the component is further based on the first and/or second data.

In preferred embodiments of the present invention, the method further comprises: receiving, by the cloud computing infrastructure, the first data, and/or receiving, by the edge computing device, the second data.

In preferred embodiments of the present invention, the edge computing device is configured to provide at least part of the first data, and/or the cloud computing infrastructure is configured to provide at least part of the second data.

In preferred embodiments of the present invention, the vehicle is connected wirelessly to the cloud computing infrastructure.

In preferred embodiments of the present invention, the cloud computing infrastructure comprises: one or more data storage devices configured to store data, and/or one or more data processing devices configured to process data.

In preferred embodiments of the present invention, the edge computing device includes a mobile device located proximate to the vehicle. The edge computing device may preferably be in data communication with the vehicle, optionally wirelessly.

In preferred embodiments of the present invention, the edge computing device is configured for sending and receiving data, preferably wirelessly, over a network.

In preferred embodiments of the present invention, the edge computing device is configured for storing data and for processing data.

In preferred embodiments of the present invention, the edge computing device includes one or more of a smart phone, a smart watch, a tablet computer, an embedded system, a wearable system, a head unit of the vehicle.

In preferred embodiments of the present invention, the vehicle comprises a communications device configured to provide data communication to the cloud computing infrastructure. The communications device may preferably be connected to one or more of the component and the edge computing device. Further, the connection may preferably be of a wireless type.

According to the invention, there is provided a system for controlling a component of a vehicle. The system comprises an edge computing device in data communication with a cloud computing infrastructure and configured for: receiving first data processed using the cloud computing infrastructure, processing second data, determining one or more operating parameters for the component based on the processed first and second data, and operating the component based on the one or more operating parameters.

In preferred embodiments of the present invention, the edge computing device is further configured for determining at least part of the first data and/or for providing at least part of the first data.

In preferred embodiments of the present invention, the edge computing device is further configured for receiving at least part of the first data and determining the one or more operating parameters for the component is further based on at least part of the first and/or at least part of the second data.

According to the invention, there is provided a vehicle comprising a system according to the present invention.

### Brief Description of Drawings

The accompanying drawings disclose exemplifying and non-limiting aspects in accordance with embodiments of the present invention.
Figure 1 schematically shows a vehicle and components thereof, as well as exemplary edge computing devices in accordance with embodiments of the present invention,
Figure 2 shows a schematic overview of a cloud computing infrastructure in accordance with embodiments of the present invention,
Figure 3 shows a detailed schematic view of a client device in accordance with embodiments of the present invention,
Figure 4 shows a schematic view of an edge runtime environment in accordance with the present invention,
Figure 5 shows an overview illustrating a communication between a cloud computing infrastructure and a client device in accordance with embodiments of the present invention,
Figure 6 shows a schematic view of an underlying data modeling scheme in accordance with embodiments of the present invention,
Figure 7 shows a flow chart of an exemplary process for smart preconditioning of a vehicle based on the infrastructure in accordance with embodiments of the present invention, and
Figure 8 shows a flow chart of an exemplary process for controlling of a component of a vehicle based on the infrastructure in accordance with embodiments of the present invention.

### Detailed Description

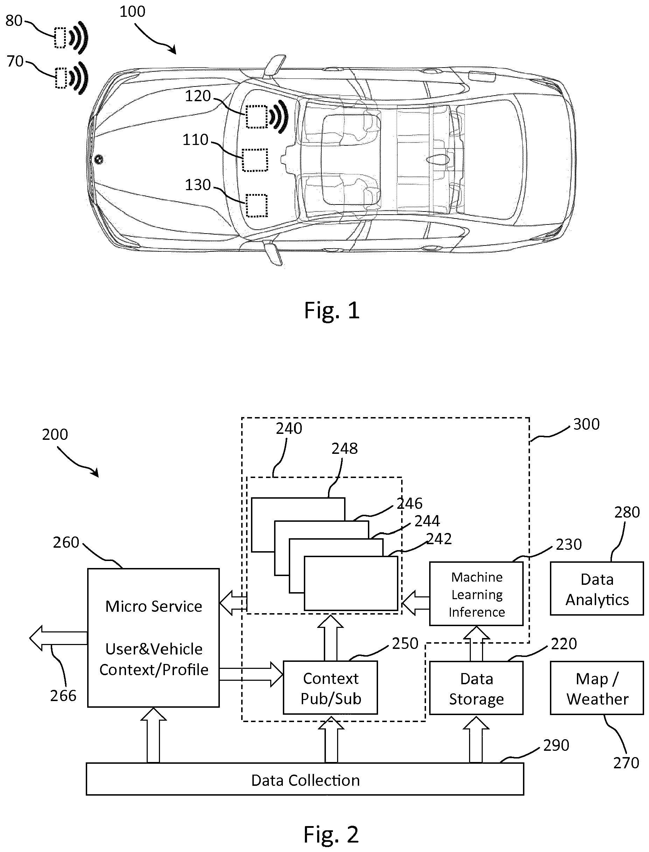

Figure 1 schematically shows a vehicle 100 and components 110, 120, 130 thereof, as well as exemplary edge computing devices 70, 80, 110 in accordance with embodiments of the present invention. It is noted that the term "edge computing device" is used within the scope of the present document as encompassing a wide range of electronic computing devices, including classic mobile devices, such as smart phones 80, smart watches 70, wearable devices, and tablet computers, but also laptop computers, personal computers, and servers, as well as specialized devices, such as control devices built into cars (e.g. head unit 110 or communication device 120 as shown in figure 1), embedded systems, intelligent sensors, and many more devices (e.g. any device configured for use with respect to the IoT). Not all possible devices are shown in the figures, but it is noted that that all of the aforementioned devices, including similar devices and devices commonly known in the art, can be used within the scope of the present invention.

Devices 70, 80, 110, 120 are merely used for illustrating the general functioning of the methods and systems presented herein. Devices 70, 80, 110, 120 may include common components of electronic computing devices, for example one or more processors, one or more memory units (e.g. volatile and/or non-volatile), one or more interface units (e.g. wireless or wired networking, input/output, display, touchscreen). Devices 70, 80, 110, 120 may be configured to perform pre-determined method steps when executing program code implementing the pre-determined method steps.

In an exemplary embodiment, a user operates a smart phone 80 and a smart watch 70, both of which configured to connect to a wireless network such as the Internet (not shown) and/or to one another. The user further operates a vehicle 100, which includes a head unit 110 (e.g. a central control unit) and a communications device 120 configured to connect to a wireless network (e.g. the Internet). The head unit 110 may include a central control unit or a similar central computing device, which optionally may be a single integrated device or a system of multiple interconnected devices, in which the functionality is a collection of function distributed over several devices in data communication with one another. The motor vehicle may further include a controllable component, such as a climate control system 130 configured to provide the car with a desired climate (e.g., temperature, A/C, air flow, heated seats/surfaces). The term "vehicle" is used within the scope of the present document as encompassing any (motor) vehicle, including cars, SUVs, pickups, trucks, vans, busses, motorcycles, and similar vehicles, having any form of engine system, including internal combustion engines, electric engines, and other known engines, as well as combinations thereof (e.g., as used in hybrid vehicles). The smart phone 80 and/or smart watch 70 may be configured to (additionally) connect to the communication device 120 of the vehicle 100.

Figure 2 shows a schematic overview of a cloud computing infrastructure 200 in accordance with embodiments of the present invention. Figure 2 generally shows an exemplary embodiment of the cloud computing infrastructure 200 (here below also referred to as infrastructure 200) in order to illustrate several components thereof, for example data storage 220, machine learning 230, or micro services 260. It is noted that the illustrated components are non-limiting and non-exhaustive, so that the infrastructure 200 may include additional, alternative, or fewer components, depending upon the respective application requirements. Arrows between the respective components indicate main paths of data communication between components. It is noted that, for clarity, the schematic overview in figure 2 does not show all possible paths of data communication, but merely selected paths having a high relevance for one or more embodiments in accordance with the present invention. Infrastructure 200 may include additional, alternative, or fewer data paths, depending upon the respective application requirements.

In the embodiment shown in figure 2, for example, general data collection 290 provides data collected from different sources (e.g. smart phones, head units, smart watches, and similar devices) to micro services 260 for processing and to data storage 220 for storing, as well as to context pub/sub 250 (pub/sub denotes publication and subscription). Micro services 260 are configured to determine, based at least in part on the data provided by data collection 290, context and profile data of both users and vehicles. User context data may include a respective current and/or next trip, together with associated information, such as specific routes and destinations. User profile data may include respective preferences regarding, for example, destinations, trips and routes, and vehicle interior settings. Vehicle context data may include vehicle status information, for example an amount of fuel or a charge level of a battery. Vehicle profile data may include general vehicle properties, for example whether the vehicle is a an electric or combustion engine type of car, or a hybrid (e.g. PHEV, HEV), supporting remote preconditioning. Micro services further provide an interface 266 for data exchange (e.g. including and API, push model, etc.).

In an exemplary method for controlling a climate control system of a vehicle, vehicle and user context may include a (predicted) next destination and trip, parking conditions (e.g. heated garage, outside), current weather, and other. It is noted that automotive industry applications may entail relatively high requirements for the underlying (cloud) computing infrastructure, for example with respect to contextual and personal services. Such applications are often based on a large-scale user base and entail corresponding requirements with respect to scalability computation and data storage resources, as well as time criticality (e.g. requiring real-time or near real-time processing). Such applications further benefit from centralized and distributed data storage, machine learning, and analytics as provided by the cloud infrastructure 200 (i.e. closer to the rich computation resources), but also from the capability of sensing context and preference-based inference distributed in the edge (i.e. closer to user and taking into account local bandwidth considerations).

It has been found that a hybrid cloud/edge infrastructure can efficiently support contextual and personalized services in automotive applications. A reference implementation realizing smart preconditioning is provided as an exemplary case, which serves to illustrate the different components and their interconnections, enabling requirements, overall platform design, user behavior learning and inference, context sensing, scalability and reliability, third party service integration, geo-location, scalable scheduler, IoT edge computing, push communication, and more. The general aim of smart preconditioning is to learn about users' travel patterns and to present the users with an option to activate climate preconditioning at an appropriate time, location, and taking into account current weather conditions.

Infrastructure 200 generally includes multiple computing devices, primarily high performance server systems running a variety of cloud computing applications, for example pertaining to data processing and data storage (e.g. for speech recognition, navigation/routing, data retrieval, data mining). Further, infrastructure 200 includes a wide range of electronic computing devices also referred to as client devices or edge computing devices, including classic mobile devices, such as smart phones 80, smart watches 70, wearable devices, and tablet computers, but also laptop computers, personal computers, and servers, as well as specialized devices, such as control devices built into cars (e.g. head unit 110 or communication device 120 as shown in figure 1), embedded systems, intelligent sensors, and many more devices (e.g. any device configured for use with respect to the IoT).

It is noted that the term "edge computing" denotes computing (e.g. data collection, data processing, data storage) being performed not at the core of the cloud infrastructure 200 (i.e. on one of the high performance server systems) but at the edge of the cloud infrastructure 200. This may be a preferred manner of processing information efficiently, for example when a locally collected data set (e.g. data collected on a smart phone) is first (pre-) processed locally (i.e. at the edge) and the locally (pre-) processed data is subsequently sent to a server located at the core of the cloud and configured to perform more resource-intensive processing on the (pre-) processed data (e.g. processing requiring more processing power and/or a larger memory than available on the edge computing device).

Infrastructure 200 may further include additional components, such as data analytics 280 and map/weather services 270. Such services, which may also be referred to as third party applications or services, may be provided by the cloud infrastructure 200 or as a service to the cloud infrastructure 200 by a third party.

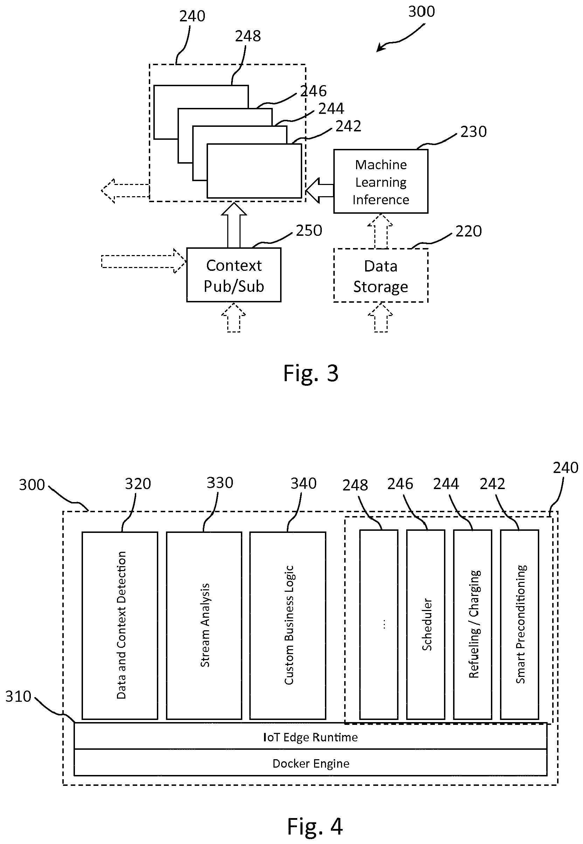

Figure 3 shows a detailed schematic view of a client device 300 in accordance with embodiments of the present invention. Client device 300 may include any one of edge computing devices 70, 80, 110, 120 as described above and is, thus, not limited to a particular type of device. As described above, client devices 300 do not provide centralized cloud services but are configured to locally perform tasks which can be handled more efficiently at or near a user.

Generally, the overall concept includes that data is collected and centralized in cloud infrastructure 200, where considerable centralized and distributed storage and computing resources are available to handle a large amount of transactions and data sets. Cloud infrastructure 200 also provides substantially all machine learning and personal modeling services, with only simple contextual and personal modeling being pushed down to the client or edge devices (300; 70, 80, 110, 120). Pushing down certain tasks to client/edge devices may improve efficiency and response time, and/or have other positive effects due to low latency, low cost, and the ability to perform tasks with low bandwidth connections or without a permanent connection to cloud infrastructure 200. Online scoring using large but advanced models is run in cloud. Here, machine learning models, such as decision tree or logistic functions can be used. The present disclosure focuses on system level aspects in order to support a multitude of different applications and use cases, including smart interior, refueling recommendation, and more. Each of these applications and use cases will require different algorithms.

Figure 3 shows some elements of client device 300 and infrastructure 200 as dashed lines in order to illustrate that elements do not exclusively belong to either client 300 or to infrastructure 200. As described, some services may be provided both by infrastructure 200, for example when considerable data storage or computing resources are required for a given task, and by client 300, for example when a considerable amount of data is collected locally (e.g. sensor data) which cannot be transmitted efficiently to infrastructure 200 due to bandwidth considerations, or when response time is critical for certain tasks that require very low latency. Therefore, some services, for example context pub/sub 250, data storage 220, and/or machine learning 230, may be partially or entirely provided by client devices 300, as opposed to being exclusively provided by infrastructure 200. Figure 3 generally illustrates that edge computing can be used for context awareness based on, for example, sensor data and machine learning inference. Data storage 220 (see dashed lines of element 220) typically remains within the cloud, as does full-fledged machine learning. As shown, context pub/sub 250 may receive data from micro services 260 and/or data collection 290 (both not shown in figure 3; see figure 2), as indicated by arrows directed at context pub/sub 250.

Figure 4 shows a schematic view of an edge runtime environment 310 in accordance with the present invention. Figure 4 schematically shows client device 300 as encompassing modules 320, 330, and 340 being connected to contextual and personal services 240 via an IoT Edge Runtime environment and underlying docker engine 310. In the matter described above and, in particular, in combination with corresponding services provided by infrastructure 200, modules 320, 330, and 340 provide edge services. Module 320 provides data and context detection services, in which locally collected data and context information may be used to generate predefined contexts and/or be matched against a set of known contexts in order to detect specific use cases. Module 330 provides stream analysis services, which facilitates, for example, the collection of a reduced, relevant data set from an incoming stream of large amounts of data that cannot be transmitted to infrastructure 200 for processing. In this manner, significant data can be identified, collected, and transmitted with low bandwidth connections. Module 340 provides custom business logic services for each application, for example smart preconditioning and/or smart interior, refueling and charging recommendation.

Figure 4 further shows contextual and personal services 240, which may include any application dependent functionality, for example smart preconditioning 242, refueling/charging 244, scheduler 246, and other functions 248. Smart preconditioning 242 serves as one exemplary application in which the vehicle is preconditioned based on a number of factors, in order to provide the user with a desired climate in the vehicle from the beginning of and throughout a trip. Such factors include, for example, vehicle and personal contexts and profiles, weather information, environmental information. Typically, there are only limited ways to precondition a vehicle such that in the beginning of a trip, the climate in the vehicle may differ greatly from a desired climate. Refueling/charging 244 serves as another exemplary application in which refueling and/or charging options are provided to a user in preparation for and/or during a trip based on a number of factors in order to provide an optimized manner to refuel and/or charge the vehicle (e.g. with respect to costs, trip distance, charging time). Again, such factors include, for example, vehicle and personal contexts and profiles, weather information, environmental information. Scheduling 246 may include different kinds of scheduling, for example scheduling operating of one or more components of a car (e.g. climate control) at certain predefined times.

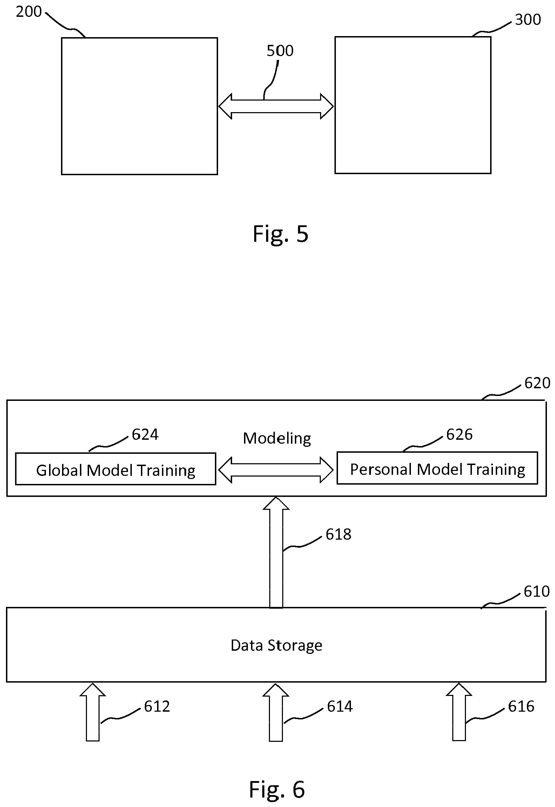

Figure 5 shows an overview illustrating a communication between a cloud/edge infrastructure 200 and a client device 300 in accordance with embodiments of the present invention. Generally, infrastructure 200 and client devices 300 are in data communication 500 with one another, for example using a push model and service provided by an IoT hub or similar component. Data communication 500 is used for transmitting data between infrastructure 200 and client devices 300, for example including telemetry data and analytic data. It constitutes a key interface between centralized computing resources and edge computing resources, in order to provide one or more of the advantages described above. It is noted that substantially any existing cloud service may be used in the implementation of the methods and systems in accordance with the present disclosure, for example the Microsoft® IoT framework. Within the scope of the present disclosure the underlying cloud infrastructure is generally exchangeable.

Figure 6 shows a schematic view of an underlying data modeling scheme in accordance with embodiments of the present invention. Data storage 610 is configured to receive data from a number of sources, including client-side telemetry sensor data 612, client-side user feedback analytics data 614, and server-side data from third party services 616 (e.g. weather data, map data). Data from such sources 612, 614, 616 is stored and provided to modeling 620 by data processing jobs 618. Modeling is then further distinguished into global model training 624 and personal model training 626. The global model is trained based on all available data and is globally available (i.e. to any user or device). For those users who have insufficient or no data available to them, the global model can be used. In cases in which more telemetry data is available and in which substantial feedback data based on the use of the application is provided, such data may be used to adapt the personal model, which fits the individual preferences more accurately than the global model. For example, one user might prefer heated seats at low temperatures more, than other users. Methods and systems in accordance with the present invention thus facilitate not only contextual services, but an individually tailored personal user experience.

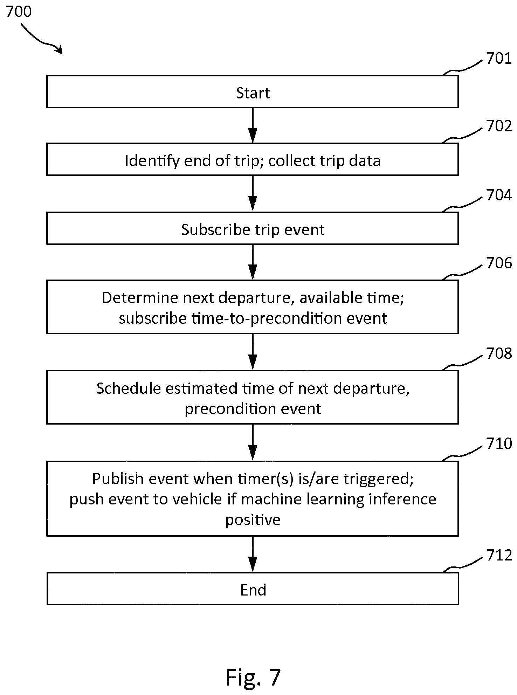

Figure 7 shows a flow chart of an exemplary process 700 for smart preconditioning of a vehicle 100 based on the infrastructure 200 in accordance with embodiments of the present invention. Process 700 starts at step 701. In step 702 the end of a previous trip is identified and associated data is collected. In step 704, a trip-end event is subscribed such that the associated collected data are processed and stored. In step 706 contextual and personal services 240 determine an estimated time of a next departure and an available time until such departure. Also, based on the estimated time of the next departure and the available time, a time-to-preconditioning event is subscribed. In step 708, micro services 260 schedule the estimated time of the next departure, as well as the preconditioning event, and set timers/reminders accordingly. When the reminders are triggered at the appropriate times, the event is published by context pub/sub 250 at step 710 and, if the machine learning inference is positive, the preconditioning event is pushed to the vehicle 100. The process ends at step 712.

Process 700 as shown in figure 7 may serve as a basic structure for data processing. It is noted that additional/alternative (sub-) steps are possible. For example, upon a trip end event, a next trip may be scheduled specifically, including an explicitly scheduled departure time. In such cases, the departure time has a high reliability as compared to an estimated departure time of a next trip that is not explicitly scheduled, but which is determined based on other data (e.g. regularly occurring/recurring trips, such as commuting to/from work). Other examples may include, that the next travel time requires input both for existing trips, as well as for travel times that don't necessarily have a trip destination associated with them.

Another example pertains to process steps upon triggering of a preconditioning event. For example, if a vehicle 100 is already in use at the time of the precondition event, sending of the push notification is prevented and the preconditioning is cancelled. In another example, cancellation/re-scheduling of a preconditioning event is triggered upon creation/update/deletion of a trip, such that any updates are propagated and trips are created or deleted accordingly. In yet other examples, a user receives a notification at the time of a preconditioning event, such that the preconditioning may proceed as scheduled or be interrupted/postponed/canceled based upon a response from a user (e.g. notification via smart phone 80 and confirmation/modification/cancellation based on user input). In other examples, data cleanup may be performed upon the request of a user and/or in terms of regular system maintenance.

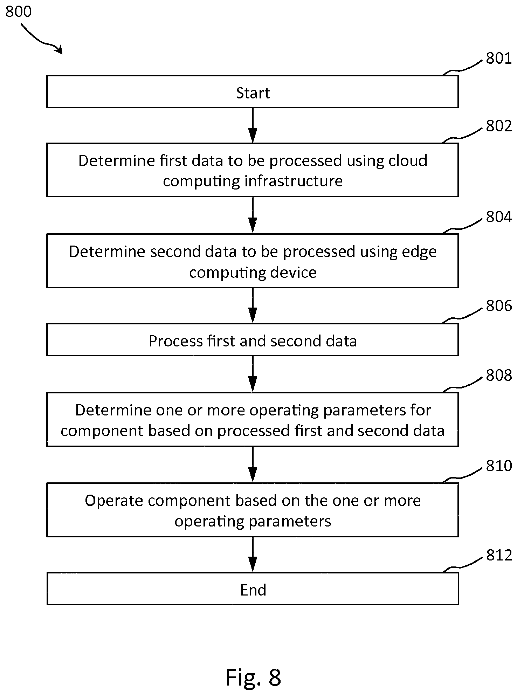

Figure 8 shows a flow chart of an exemplary process 800 for controlling of a component 130 of a vehicle 100 based on the infrastructure 200 in accordance with embodiments of the present invention. Process 800 starts at step 801. In step 802, first data to be processed using the cloud computing infrastructure 200 are determined. In step 804, second data to be processed using the edge computing device 70, 80, 110, 120 are determined. In step 806, the first and second data are processed. In step 808, one or more operating parameters for the component 130 are determined based on the processed first and second data. In step 810, the component 130 is operated based on the one or more operating parameters. Process 800 ends at step 812.

## Claims

1. Method for controlling a component (130) of a vehicle (100), the vehicle being connected to a cloud computing infrastructure (200) and including an edge computing device (70, 80, 110, 120), the edge computing device being in data communication with the cloud computing infrastructure (200), the method comprising:
determining first data to be processed using the cloud computing infrastructure (200);
determining second data to be processed using the edge computing device (70, 80, 110, 120);
processing the first and second data;
determining one or more operating parameters for the component (130) based on the processed first and second data; and
operating the component (130) based on the one or more operating parameters.

2. Method of the preceding claim, wherein the component (130) includes a climate control system and wherein operating the component (130) comprises providing the climate control system with one or more climate control parameters configured for preconditioning the vehicle (100).

3. Method of the preceding claim, wherein the one or more climate control parameters configured for preconditioning the vehicle (100) comprise one or more of:
a temperature value,
an air flow,
a heating power of a heating unit, and
a cooling power of a cooling unit.

4. Method of claim 1, wherein the component (130) includes a user information system and wherein operating the component (130) comprises providing, using the user information system, information regarding refueling and/or recharging of the vehicle (100).

5. Method of any one of the preceding claims, wherein determining the one or more operating parameters for the component (130) is further based on the first and/or second data.

6. Method of any one of the preceding claims, further comprising:
receiving, by the cloud computing infrastructure (200), the first data, and/or
receiving, by the edge computing device (70, 80, 110, 120), the second data.

7. Method of any one of the preceding claims, wherein:
the edge computing device (70, 80, 110, 120) is configured to provide at least part of the first data, and/or
the cloud computing infrastructure (200) is configured to provide at least part of the second data.

8. Method of any one of the preceding claims, wherein the vehicle (100) is connected wirelessly to the cloud computing infrastructure (200).

9. Method of any one of the preceding claims, wherein the cloud computing infrastructure (200) comprises:
one or more data storage devices (220, 290) configured to store data, and/or
one or more data processing devices (230, 250, 260, 270, 280) configured to process data.

10. Method of any one of the preceding claims, wherein the edge computing device (70, 80) includes a mobile device located proximate to the vehicle (100).

11. Method of the preceding claim, wherein the edge computing device (70, 80) is in data communication with the vehicle (100), optionally wirelessly.

12. Method of any one of the preceding claims, wherein the edge computing device (70, 80, 110, 120) is configured for sending and receiving data, preferably wirelessly, over a network.

13. Method of any one of the preceding claims, wherein the edge computing device (70, 80, 110, 120) is configured for storing data and for processing data.

14. Method of any one of the preceding claims, wherein the edge computing device includes one or more of a smart phone (80), a smart watch (70), a tablet computer, an embedded system, a wearable system, a head unit (110) of the vehicle (100).

15. Method of any one of the preceding claims, wherein the vehicle (100) comprises a communications device (120) configured to provide data communication to the cloud computing infrastructure (200).

16. Method of the preceding claim, wherein the communications device (120) is connected to one or more of the component (130) and the edge computing device (70, 80, 110); optionally wherein the connection is of a wireless type.

17. System for controlling a component (130) of a vehicle (100), the system comprising an edge computing device (70, 80, 110, 120) in data communication with a cloud computing infrastructure (200), the edge computing device being configured for:
receiving first data processed using the cloud computing infrastructure (200);
processing second data;
determining one or more operating parameters for the component (130) based on the processed first and second data; and
operating the component (130) based on the one or more operating parameters.

18. System of the preceding claim, wherein the edge computing device (70, 80, 110, 120) is further configured for determining at least part of the first data and/or for providing at least part of the first data.

19. System of the preceding claim, wherein the edge computing device (70, 80, 110, 120) is further configured for receiving at least part of the first data and wherein determining the one or more operating parameters for the component (130) is further based on at least part of the first and/or at least part of the second data.

20. Vehicle (100) comprising a system of any one of the three preceding claims.
